# EUROPEAN PATENT SPECIFICATION

(11) **EP 3 060 687 B1**
(45) Date of publication and mention of the grant of the patent: **21.04.2021**
(21) Application number: 14856044.4
(22) Date of filing: 21.10.2014
(51) Int. Cl.: C21D 6/00, C21D 7/13, C21D 8/00, B21D 24/16, C21D 1/673

(54) **METHOD FOR TRIMMING A HOT FORMED PART**
VERFAHREN ZUM BEARBEITEN EINES HEISSGESCHMIEDETEN TEILS
PROCÉDÉ D'ÉBAVURAGE D'UNE PIÈCE FORMÉE À CHAUD

(30) Priority: 21.10.2013 US 201361893318 P
(43) Date of publication of application: 31.08.2016
(73) Proprietor: Magna International Inc., Aurora, ON L4G 7K1 (CA)
(72) Inventor: STEINEBACH, Edward, K., Oak Ridge, TN 37830 (US); JONES, Mark, Justin, Knoxville, TN 37934 (US); BRADY, Jeremiah, John, Knoxville, TN 37922 (US); ADAMS, Kenneth, R., Troy, MI 48098 (US)
(74) Representative: Glawe, Delfs, Moll
(86) International application number: PCT/US2014/061519
(87) International publication number: WO 2015/061281

(56) References cited:
- EP-A1- 1 253 208
- WO-A1-2008/025387
- WO-A2-99/26740
- DE-A1-102006 026 805
- DE-A1-102007 002 678
- GB-A- 833 078
- US-A1- 2009 101 249
- US-A1- 2010 018 277
- US-A1- 2011 315 281
- US-A1- 2012 211 128
- US-A1- 2012 247 171
- US-B1- 7 459 038
- US-B1- 7 842 142
- US-B2- 7 165 434

## Description

### CROSS-REFERENCE TO PRIOR APPLICATIONS

This Patent Application claims the benefit of U.S. Provisional Patent Application Serial No. 61/893,318 filed October 21, 2013, entitled "Method For Trimming A Hot Formed Part,."

### BACKGROUND OF THE INVENTION

### 1. Field of the Invention

The invention relates generally to hot formed steel parts, such as automotive body components, and methods for manufacturing the hot formed steel parts.

### 2. Related Art

Automotive body components are oftentimes manufactured by hot forming a steel blank. The process includes heating the steel blank in an oven to a temperature of approximately 850° C to 900° C until the steel blank obtains an austenite microstructure. Next, the heated blank is transferred from the oven to a hot forming apparatus which includes a pair of dies. The heated blank is then stamped or pressed to a predetermined shape between the dies. The hot forming process also typically includes a quenching step to increase the strength of the hot formed part. During the quenching step, the hot formed part is cooled to a temperature low enough to transform the austenite microstructure to a martensite microstructure.

After the hot forming process, the hot formed part is removed from the dies and transferred to a separate location for at least one post-forming operation. The hot formed part is typically trimmed, pierced, sheared, or otherwise cut to achieve a desired shape. However, due to the high strength of the martensite microstructure present in the hot formed part, expensive post-forming processes and equipment are typically required to cut the hot formed part and achieve the desired shape. For example, a costly laser cutting process is oftentimes used to trim the hot formed part.

From DE 10 2006 026805 A1, an apparatus for hot-forming is known, comprising an upper forming surface with a cutting component and a hold-down element.

In US2010/0018277 A1, a steel-workpiece processing apparatus for hot-forming, press-quenching and cutting a semifinished workpiece of hardenable steel is described. The apparatus comprises a die and an upper tool with a punch, hold-down elements and blades.

### SUMMARY OF THE INVENTION

The invention provides a method for manufacturing a hot formed steel part, according to the appended claims, such as an automotive body component, which is trimmed, pierced, sheared, or otherwise cut to a desired shape, without a costly post-forming operation, such as laser cutting. The method first includes heating a blank formed of steel material to a temperature of 880° C to 950° C, and maintaining the blank at the temperature of 880° C to 950° C until the microstructure of the steel material is substantially austenite. The method then includes disposing the blank on a lower forming surface of a lower die while the blank is at a temperature of at least 400° C and the microstructure of the blank is still substantially austenite. The heated blank is initially spaced from an upper forming surface of an upper die. The upper die is coupled to a cutting component, and the cutting component is disposed adjacent the upper forming surface.

The method next includes bringing the upper die toward the lower die to form and cut the heated blank. The step of bringing the upper die toward the lower die includes bringing the upper forming surface of the upper die into contact with the blank to form the blank between the upper and lower forming surfaces; and moving at least a portion of the upper die and the cutting component together longitudinally until the cutting component cuts at least a portion of the blank. The cutting step is conducted while the blank is at a temperature of at least 400° C and the microstructure of the blank is substantially austenite.

The cutting component is either moveable longitudinally relative to the upper forming surface, and the cutting step occurs after the forming step and includes moving the cutting component longitudinally past the upper forming surface, or the cutting component is fixed relative to the upper forming surface; the upper forming surface and the cutting component provides an upper ledge therebetween; the lower forming surface presents a lower ledge aligned with the upper ledge; and the cutting step occurs simultaneously with the forming step and includes moving the upper ledge toward the lower ledge.

The method further includes cooling the blank at a rate of at least 27 degrees per second. The cooling step is conducted while the upper forming surface and the lower surface remain in contact with the cut blank and until the microstructure of the cut blank includes martensite.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 illustrates a method of manufacturing a hot formed part according to an exemplary embodiment of the invention;
Figure 2A is a cross-sectional view of a hot forming apparatus according to an exemplary embodiment of the invention immediately before a cutting step;
Figure 2B is a cross-sectional view of a hot forming apparatus according to an exemplary embodiment of the invention immediately after a cutting step;
Figure 3 is a cross-sectional view of a hot forming apparatus according to another exemplary embodiment of the invention;
Figure 4 is a perspective view of an exemplary hot formed part showing an approximate temperature profile along the hot formed part at the start of a cutting step; and
Figure 5 is a chart illustrating a load force applied to a hot formed part by a cutting component of a hot forming apparatus according to an exemplary embodiment of the invention.

### DETAILED DESCRIPTION

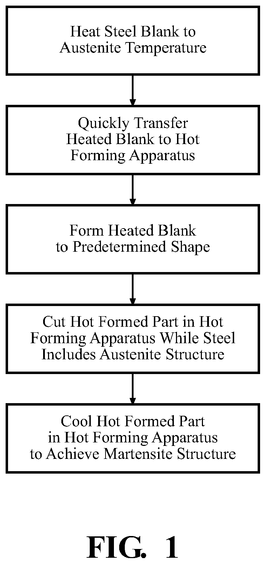

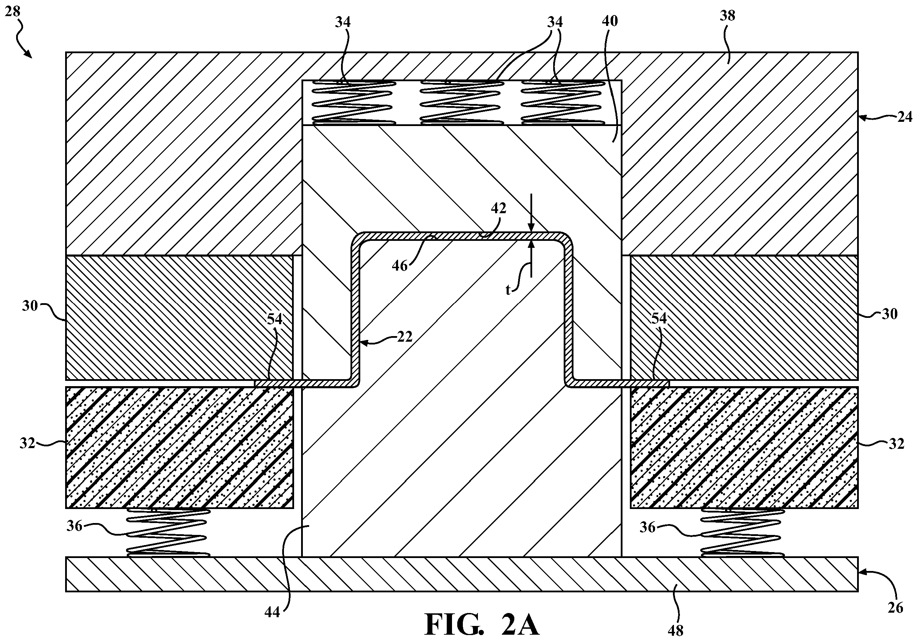

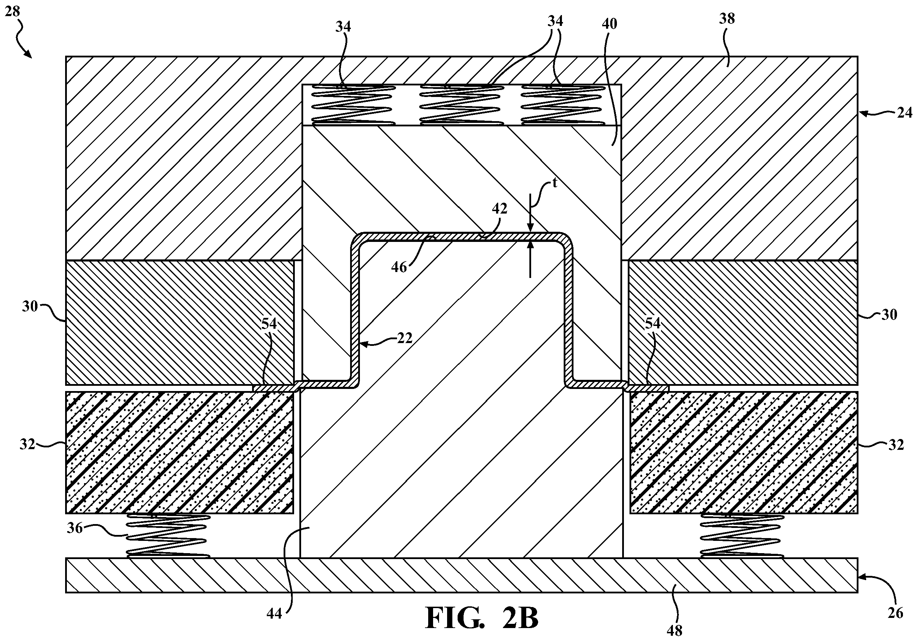

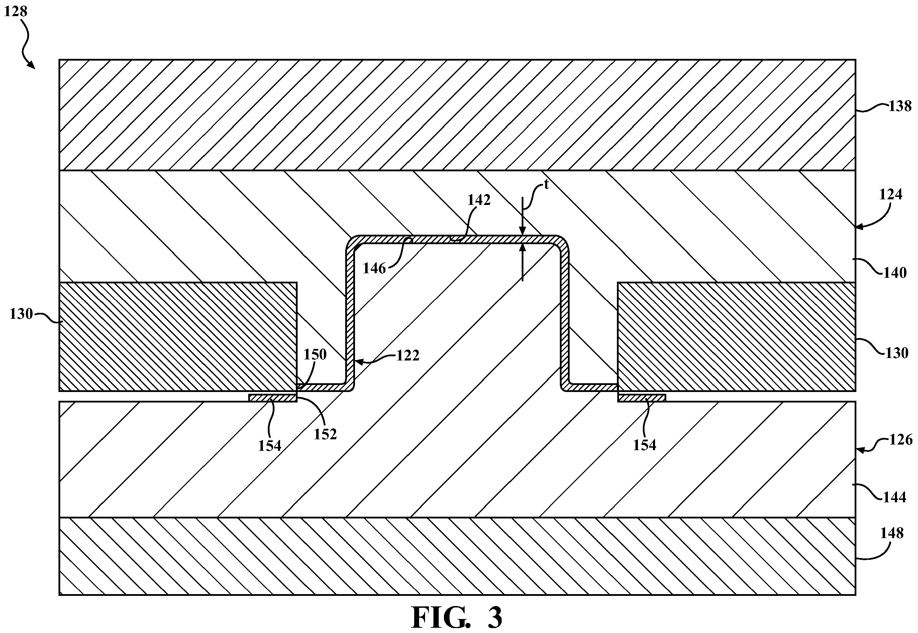

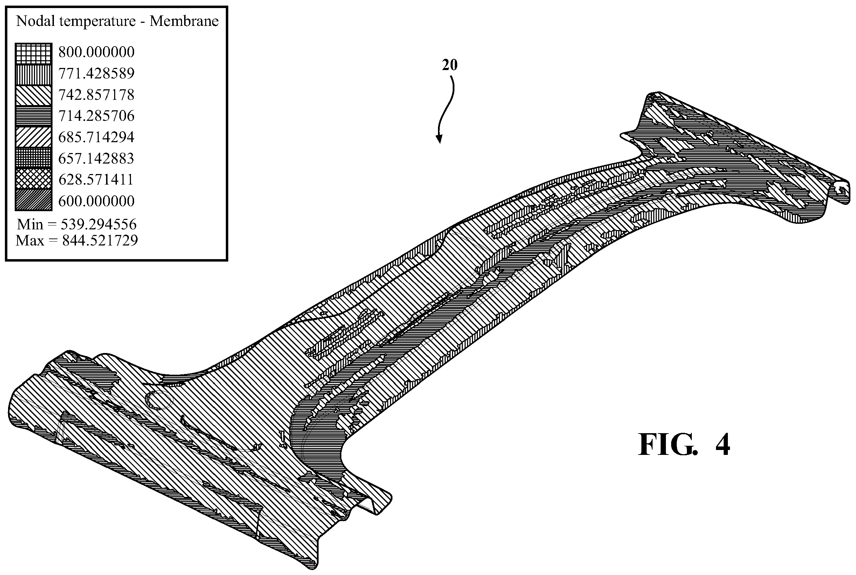

The invention provides an improved method for manufacturing a hot formed steel part **20,** such as an automotive body component, without a costly post-forming operation. The method includes heating a steel blank **22** to an austenite temperature, and cutting the heated blank **22** while forming the heated blank **22,** or immediately after forming the heated blank **22,** between a pair of dies **24, 26** of a hot forming apparatus **28.** The cutting step occurs while the microstructure of the blank **22** is still substantially austenite. Figure 1 illustrates steps of the hot forming method according to an exemplary embodiment. Figures 2A, 2B, and 3 illustrate exemplary hot forming apparatuses **28,** and Figure 4 illustrates an exemplary hot formed part **20.**

The method begins by providing the blank **22** formed of a steel material, which can be any type of steel material. In one embodiment, the steel material used to form the blank **22** comprises 0.18% to 0.28% carbon, 0.7% to 1.0% silicon, 1.0% to 2.0% manganese, 0.12% to 0.7% chromium, 0.1% to 0.45% molybdenum, 0.025% maximum phosphorus, 0.008% to 0.01% sulfur, 0.02% to 0.05% titanium, 0.01% to 0.06% aluminum, and 0.002% to 0.004% boron, based on the total weight of the steel material. In another embodiment, the steel material comprises a mixture of manganese and boron, for example 22MnB5. The size and shape of the blank **22** depends on the desired size, shape, and application of the hot formed part **20** to be manufactured. In one embodiment, the blank **22** is initially provided with a coating formed of aluminum and silicon (AISi). This coating ultimately forms a diffusion layer along the surface of the hot formed part **20.**

Once the blank **22** is provided, the method includes annealing or otherwise heating the blank **22** in an oven or furnace. The blank **22** is heated or annealed for a period of time causing an austenite microstructure to form throughout the steel material. The temperature and duration of the heating step varies depending on the dimensions of the blank **22** and type of steel material used. However, the blank **22** is typically heated to a temperature of 880° C to 950° C and is held at that temperature for at least 30 seconds to form the austenite microstructure. In one embodiment, the blank **22** is heated to a temperature of 910° C for at least 20 seconds. In another embodiment, the blank **22** is heated to a temperature of 930° C for at least 20 seconds. During the heating step, all carbides in the steel material of the blank **22** should dissolve so that there are no residual carbides. After the heating step, the microstructure of the steel material is substantially austenite, for example at least 75% austenite, or entirely austenite (100% austenite).

The heating step is adjusted slightly when the steel blank **22** is coated with the AlSi coating, as additional time is required for the AlSi coating to form a diffusion layer having a sufficient thickness along the surface of the blank **22.** Maintaining the blank **22** at a temperature above 800° C for at least 150 seconds is typically required for the AlSi coating to form a diffusion layer having a sufficient thickness. Additional heating time is also required due to the reflective nature of the AlSi coating at temperatures of 580° C to 780° C.

Immediately following the heating step, the heated blank **22** is quickly transferred from the oven to the hot forming apparatus **28** while the blank **22** is still above the austenite temperature and thus still includes the substantially austenite microstructure. In one embodiment, the steel material of the blank **22** is entirely austenite when it enters the hot forming apparatus **28.** In another embodiment, the steel material of the blank **22** includes at least 75% austenite, but less than 100% austenite, when it enters the hot forming apparatus **28.** The blank **22** is transferred quickly to the hot forming apparatus **28** so that the temperature of the blank **22** stays above 400° C.

The method next includes forming and trimming, piercing, shearing, or otherwise cutting the heated blank **22** to a desired shape in the hot forming apparatus **28.** The forming and cutting steps both occur in the hot forming apparatus **28** and during a single die stroke. In other words, the cutting step occurs simultaneously with the forming step or immediately thereafter. The blank **22** is at a temperature of at least 400° C, such as a temperature of 400° C to 800° C during the forming and cutting steps. In addition, the forming and cutting steps are both conducted while the steel material includes a 100% austenite microstructure or at least a substantially austenite microstructure.

Figures 2A and 2B illustrate an exemplary hot forming apparatus **28** in a closed position. In this embodiment, the hot forming apparatus **28** includes an upper die **24,** a lower die **26,** a cutting component **30,** a pad **32,** upper springs **34,** and lower springs **36.** The cutting component **30** and upper springs **34** are fixed to a first portion **38** of the upper die **24,** for example by bolts. A second portion **40** of the upper die **24,** referred to as an upper form, presents an upper forming surface **42** and is surrounded by the first portion **38** and the cutting component **30.** The upper springs **34** are disposed on the second portion **40** and bias the first portion **38** away from the second portion **40.** Thus, the first portion **38** and connected cutting component **30** are movable relative to the second portion **40** of the upper die **24.** For example, when the upper springs **34** are compressed, the first portion **38** of the upper die **24** and cutting component **30** move together longitudinally such that the cutting component **30** moves past the upper forming surface **42** and toward the pad **32.** The cutting component **30** is formed of a material capable of cutting the steel material of the blank **22.** In the exemplary embodiments, the cutting component **30** is also formed of a steel material, referred to as trim steel.

As shown in Figures 2A and 2B, the lower die **26** includes a third portion **44,** referred to as a lower form, which presents a lower forming surface **46** for supporting the steel blank **22.** The lower springs **36** are fixed to a fourth portion **48** of the lower die **26,** for example by bolts. The pad **32** is disposed on opposite sides of the lower forming surface **46** beneath the cutting component **30,** and the lower springs **36** bias the pad **32** toward the cutting component **30** and the upper die **24.** Although the Figures show the upper die **24** positioned above the lower die **26,** the position of the hot forming apparatus **28** could be reversed such that the upper die **24** is positioned below the lower die **26.**

Prior to the forming step, the hot forming apparatus **28** is in an open position, and thus the upper die **24** and cutting component **30** are spaced from the lower die **26** and pad **32.** The geometry of the upper forming surface **42** and the lower forming surface **46** varies depending on the desired shape of the part **20** to be formed. In the embodiment of Figures 2A and 2B, the upper forming surface **42** is recessed, and the lower forming surface **46** is received in the recessed upper forming surface **42** when the apparatus **20** is closed. Also, prior to the forming step, when the hot forming apparatus **28** is open, no pressure is placed on the lower springs **36,** such that the lower springs **36** are extended and the pad **32** is generally aligned with a portion of the lower forming surface **46.**

The forming step occurs immediately after transferring the heated blank **22** to the hot forming apparatus **28,** so that the temperature of the blank **22** stays above 400° C. In the embodiment of Figures 2A and 2B, the heated blank **22** is disposed on the uppermost portion of the lower forming surface **46** such that the edges of the heated blank **22** project outwardly of the lower forming surface **46** and are located above the pad **32.** The forming step then includes bringing the first and second portions **38, 40** of the upper die **24** together with the cutting component **30** downwardly toward the lower die **26** and the heated blank **22.** While the upper die **24** and cutting component **30** move downward toward the heated blank **22,** the upper springs **34** are not compressed. Thus, the first portion **38** of the upper die **24** and the cutting component **30** do not move relative to the second portion **40** of the upper die **24** during the forming step.

As the upper die **24** moves downward, the upper forming surface **42** contacts and presses the heated steel blank **22** around the lower forming surface **46** to form the blank **22** to a predetermined shape, as shown in Figures 2A and 2B. The upper forming surface **42** presses the heated blank **22** until the edges of the heated blank **22** rest on or slightly above the pad **32** on opposite sides of the lower forming surface **46.** The steel material of the blank **22** is still substantially austenite during the forming step, for example at least 75% austenite or 100% austenite.

The method further includes cutting the heated blank **22** to provide the desired shape while the blank **22** is still in the hot forming apparatus **28** and includes the substantially austenite microstructure. The cutting step occurs during the same die stroke as the forming step. In the exemplary embodiment of Figures 2A and 2B, the first portion **38** of the upper die **24** compresses the upper springs **34,** and the first portion **38** and the cutting component **30** continue moving downward together while the second portion **40** of the upper die **24** remains in a fixed position. The cutting component **30** then moves longitudinally past the upper forming surface **42** while the upper forming surface **42** remains in contact with the heated blank **22.** During the cutting step, the cutting component **30** cuts at least a portion of the steel blank **22.** In one embodiment, the cutting component **30** moves past the lower forming surface **46** and shears the edges off the blank **22.** In this case, the cutting component **30** presses the edges, referred to as scrap **54,** into the pad **32,** thereby compressing the lower springs **36.** In this embodiment, the cutting component **30** cuts through the entire thickness **t** of the blank **22,** and the desired final shape of the blank **22** is achieved without any post-forming operation outside of the hot forming apparatus **28,** such as laser trimming. In another embodiment, shown in Figure 2B, only a portion of the thickness t of the blank **22** is cut by the cutting component **30** in the hot forming apparatus **28.** For example, the cutting component **30** may cut through not greater than 95%, for example 75% to 95%, or 90% of the thickness **t** of the steel blank **22.** In this case, the scrap **54** remains attached to the blank **22,** but is easily removed from the part **20** outside of the hot forming apparatus **28.**

An alternate embodiment of the hot forming apparatus **128** is shown in Figure 3. The method conducted using the forming apparatus of Figure 3 is referred to as a "zero entry" method. In this embodiment, the hot forming apparatus **128** includes the cutting component **130** fixed to the first portion **138** of the upper die **124,** without the upper springs **34,** lower springs **36,** and pad **32.** The second portion **140** of the upper die **124** presents the recessed upper forming surface **142** and the third portion **144** of the lower die **126** presents the lower forming surface **146.** However, unlike the hot forming apparatus **28** of Figures 2A and 2B, the cutting component **130** is fixed to the second portion **140** of the upper die **124,** and the second portion **140** is fixed to the first portion **138.** In addition, the upper forming surface **142** and the cutting component **130** provide an upper ledge **150** therebetween, and the lower forming surface **146** presents a lower ledge **152** aligned with the upper ledge **150** for shearing the heated blank **122.** As in the embodiment of Figures 2A and 2B, the upper die **124** and cutting component **130** move downward, and the upper forming surface **142** presses the heated blank **122** around the lower forming surface **146** to a predetermined shape.

As alluded to above, in the embodiment of Figure 3, the cutting component **130** does not move relative to the first portion **138** or the second portion **140** of the upper die **124.** Instead, the upper ledge **150** of the upper die **124** moves toward the lower ledge **152** of the lower die **126** to shear the edges off the heated blank **122.** Alternatively, the cutting component **130** could cut through less than 95% of the thickness **t** of the blank **122,** such that the scrap **154** remains connected to the blank **122,** but can be easily removed outside of the hot forming apparatus **128.** In either case, the shearing step begins when the distance between the upper ledge **150** and lower ledge **152** is equal to the thickness t of the steel blank **122.** As in the embodiment of Figures 2A and 2B, the forming and cutting steps occur in a single die stroke and while the microstructure of the blank **122** is substantially austenite.

In other embodiments, the cutting step can include trimming, piercing, or another type of cutting technique, instead of shearing, or in addition to shearing. Thus, the cutting component **30** of the hot forming apparatus **28** is designed accordingly. Preferably, the hot forming apparatus **28** is designed so that the cutting clearance, also referred to as the die clearance, is between 2% and 15% of the thickness t of the blank **22.** In the embodiments of Figures 2A, 2B, and 3 the cutting clearance is equal to the distance between a cutting edge of the cutting component **30** and a cutting edge of the adjacent lower forming surface **46,** when the hot forming apparatus **28** is closed.

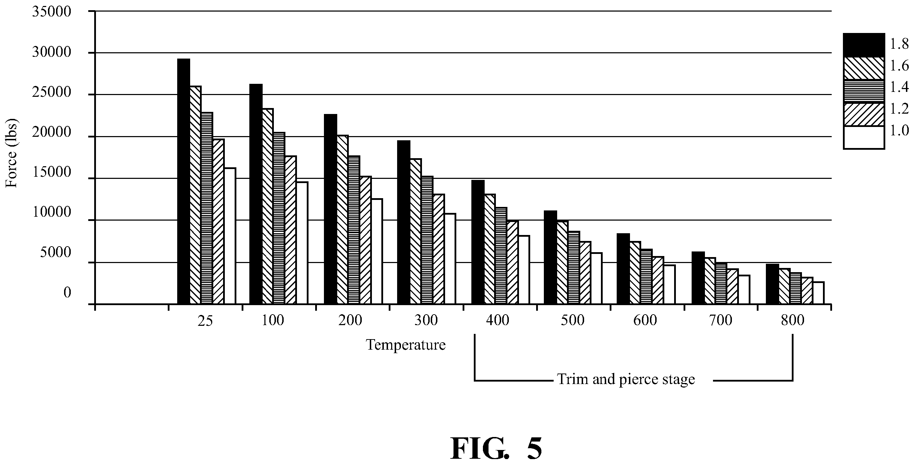

As stated above, the step of cutting the blank **22** occurs while the steel material is still at a temperature of at least 400° C, preferably 400° C to 850° C, and still has a substantially austenite microstructure. Figure 4 is a perspective view of an exemplary hot formed part **20,** specifically a B-pillar, showing the approximate temperature profile along the part **20** at the start of the cutting step, which in this case includes trimming and piercing. The temperature profile indicates that the majority of the hot formed part **20** is at a temperature of at least 685° C and the steel material is still 100% austenite at the start of the cutting step. Figure 5 is a chart illustrating the load force applied to the hot formed part **20** by a 16 mm cutting component **30,** such as a punch. The load force is provided for temperatures ranging from 25° C to 800° C, and for part thicknesses **t** ranging from 1.0 to 1.8 mm. Figure 5 also indicates that the temperature of the cutting step is from 400° C to 800° C.

In order for the microstructure of the blank **22** to remaining substantially austenite during the cutting step, a quick process is required. In one embodiment, when the steel material includes 100% austenite during the cutting step, the amount of time from when the heated blank **22** exits the oven until forming the heated blank **22** between the forming surfaces **42, 46,** i.e. the time at which the hot forming apparatus **28** is closed, is only 5 to 15 seconds. In another embodiment, when the steel material includes some retained austenite during the cutting step, but less than 100% austenite, the amount of time from when the heated blank **22** exists through the door of the oven until the hot forming apparatus **28** is closed is 5 to 20 seconds.

After the forming and cutting steps, the method includes cooling the blank **22** in the hot forming apparatus **28,** while the hot forming apparatus **28** is still closed. The cooling step typically includes quenching. The hot forming apparatus **28** can include any type of cooling mechanism to cool or quench the hot formed blank **22.** For example, the upper and lower dies **24, 26** could include a plurality of cooling channels for conveying a cooling fluid therethrough.

The hot formed blank **22** should be cooled or quenched at a rate that causes a martensite microstructure to form in the steel material, and preferably throughout the entire steel material so that the finished hot formed part **20** is 100% martensite. The martensite microstructure provides increased strength which is beneficial when the hot formed part **20** is used as an automotive body component, such as a B-pillar. In one embodiment, the method includes cooling the hot formed blank **22** at a minimum cooling rate of 27 degrees per second to obtain the martensite microstructure throughout the steel material. The method finally includes opening the hot forming apparatus **28** once the temperature of the hot formed part **20** is 200° C or lower, and allowing the hot formed part **20** to cool to room temperature. Since the cutting step is performed in the hot forming apparatus **28,** the method does not require any costly post-forming operations outside of the hot forming apparatus **28,** such as a separate laser cutting process. If the scrap **54** remains attached to the hot formed part **20,** a simple and inexpensive post-forming operation can be used to remove the scrap **54.**

The invention also provides a hot formed part **20** manufactured using the method and hot forming apparatus **28** described above. The hot formed part **20** is manufactured by forming the heated blank **22** to a predetermined shape and then trimming, piercing, shearing, or otherwise cutting the blank **22** in the hot forming apparatus **28** to achieve a desired shape. Thus, there is no need for a costly post-forming operation, such as laser trimming. The hot formed part **20** preferably includes a martensite microstructure throughout the steel material with no residual carbides in the steel material, which could decrease the ultimate tensile strength (UTS) of the part **20.** In addition, the hot formed part **20** can optionally include a diffusion layer comprising AlSi. In one embodiment, the hot formed part **20** has a yield strength of 500 MPa to 1,600 MPa; an ultimate tensile strength (UTS) of 900 MPa to 2,000 MPa; an elongation of 5.0%, minimum; and a hardness (HRV) of 300 to 600. The hot formed part **20** can be designed for use as any type of automotive body component, such as a pillar, rocker, roof rail, bumper, or door intrusion beam of an automotive vehicle. In one embodiment, the hot formed part **20** is a B-pillar having the design shown in Figure 4. Alternatively, the hot formed part **20** can be used in a non-automotive application.

Obviously, many modifications and variations of the present invention are possible in light of the above teachings and may be practiced otherwise than as specifically described while within the scope of the claims.

## Claims

1. A method of hot forming a steel part, comprising the steps of:
heating a blank (22, 122) formed of steel material to a temperature of 880° C to 950° C;
maintaining the blank (22, 122) at the temperature of 880° C to 950° C until the microstructure of the steel material is substantially austenite;
disposing the blank (22, 122) on a lower forming surface (46, 146) of a lower die (26, 126) and spaced from an upper forming surface (42, 142) of an upper die (24, 124) while the blank (22, 122) is at a temperature of at least 400° C and the microstructure of the blank (22, 122) is substantially austenite, wherein the upper die (24, 124) is coupled to a cutting component (30, 130), and the cutting component (30, 130) is disposed adjacent the upper forming surface (42, 142);
bringing the upper die (24, 124) toward the lower die (26, 126) ;
the step of bringing the upper die (24, 124) toward the lower die (26, 126) including bringing the upper forming surface (42, 142) of the upper die (24, 124) into contact with the blank (22, 122) to form the blank (22, 122) between the upper and lower forming surface (46, 146)s;
the step of bringing the upper die (24, 124) toward the lower die (26, 126) including moving at least a portion of the upper die (24, 124) and the cutting component (30, 130) together longitudinally until the cutting component (30, 130) cuts at least a portion of the blank (22, 122);
the cutting step being conducted while the blank (22, 122) is at a temperature of at least 400° C and the microstructure of the blank (22, 122) is substantially austenite; and
cooling the blank (22, 122) at a rate of at least 27 degrees per second while the upper forming surface (42, 142) and the lower surface remain in contact with the blank (22, 122) and until the microstructure of the blank (22, 122) includes martensite,
wherein either the cutting component (30, 130) is moveable longitudinally relative to the upper forming surface (42, 142), and the cutting step occurs after the forming step and includes moving the cutting component (30, 130) longitudinally past the upper forming surface (42, 142), or
wherein the cutting component (30, 130) is fixed relative to the upper forming surface (42, 142); the upper forming surface (42, 142) and the cutting component (30, 130) provides an upper ledge (150) therebetween; the lower forming surface (46, 146) presents a lower ledge aligned with the upper ledge (150); and the cutting step occurs simultaneously with the forming step and includes moving the upper ledge (150) toward the lower ledge.

2. The method of claim 1, wherein the cutting component (30, 130) cuts through not greater than 95% of the thickness of the blank (22, 122) during the cutting step.

3. The method of claim 1, wherein the cutting component (30, 130) cuts through the entire thickness of the blank (22, 122) during the cutting step.

4. The method of claim 1, wherein a first portion of the upper die (24) is coupled to the cutting component (30), a second portion of upper die (24) presents the upper forming surface (42), the cutting component (30) is movable relative to the second portion of the upper die (24), and the first portion of the upper die (24) is biased away from the second portion.

5. The method of claim 4, wherein a pad is disposed adjacent the lower forming surface (46) of the lower die (26) beneath the cutting component (30), and the pad is biased toward the upper die (24).

6. The method of claim 1, wherein the blank (22, 122) is at a temperature of at least 685° C and the micro structure of the blank (22, 122) is entirely austenite during the cutting step.

7. The method of claim 1, wherein the blank (22, 122) has a thickness, the upper (24, 124) and lower dies (26, 126) present a cutting clearance therebetween, and the cutting clearance is 2% to 15% of the thickness of the blank (22, 122) .

8. The method of claim 1, wherein the steel material of the blank (22, 122) comprises 0.18% to 0.28% carbon, 0.7% to 1.0% silicon, 1.0% to 2.0% manganese, 0.12% to 0.7% chromium, 0.1% to 0.45% molybdenum, 0.025% maximum phosphorus, 0.008% to 0.01% sulfur, 0.02% to 0.05% titanium, 0.01% to 0.06% aluminum, and 0.002% to 0.004% boron, based on the total weight of the steel material.

9. The method of claim 1, wherein a coating formed of aluminum and silicon is applied to the steel blank (22, 122) prior to the heating step.

10. The method of claim 1, wherein the cutting step includes at least one of trimming, piercing, and shearing the blank (22, 122).

11. The method of claim 1, wherein steps of heating and maintaining the blank (22, 122) at the temperature of 880° C to 950° C until the micro structure of the steel material is substantially austenite occurs in an oven separate from the upper (24, 124) and lower dies (26, 126), and further including the step of removing the heated blank (22, 122) from the oven and transferring the heated blank (22, 122) to the lower forming surface (46, 146), wherein the amount of time between the step of removing the blank (22, 122) from the oven and the step of forming the blank (22, 122) between the upper (42, 142) and lower forming surfaces (46, 146) is 5 to 20 seconds.

## Patentansprüche

1. Verfahren zum Warmformen eines Stahlteils, umfassend die Schritte:
Erhitzen eines aus Stahlmaterial gebildeten Rohlings (22, 122) auf eine Temperatur von 880 °C bis 950 °C;
Halten des Rohlings (22, 122) bei der Temperatur von 880 °C bis 950 °C, bis die Mikrostruktur des Stahlmaterials im Wesentlichen Austenit ist;
Anordnen des Rohlings (22, 122) auf einer unteren Formoberfläche (46, 146) eines unteren Formwerkzeugs (26, 126) und beabstandet von einer oberen Formoberfläche (42, 142) eines oberen Formwerkzeugs (24, 124), wobei sich der Rohling (22, 122) bei einer Temperatur von wenigstens 400 °C befindet und die Mikrostruktur des Rohlings (22, 122) im Wesentlichen Austenit ist, wobei das obere Formwerkzeug (24, 124) an eine Schneidkomponente (30, 130) gekoppelt ist und die Schneidkomponente (30, 130) benachbart zu der oberen Formoberfläche (42, 142) angeordnet ist;
Bringen des oberen Formwerkzeugs (24, 124) zu dem unteren Formwerkzeug (26, 126);
wobei der Schritt des Bringens des oberen Formwerkzeugs (24, 124) zu dem unteren Formwerkzeug (26, 126) umfasst, die obere Formoberfläche (42, 142) des oberen Formwerkzeugs (24, 124) in Kontakt mit dem Rohling (22, 122) zu bringen, um den Rohling (22, 122) zwischen der oberen und der unteren Formoberfläche (46, 146) zu formen;
wobei der Schritt des Bringens des oberen Formwerkzeugs (24, 124) zu dem unteren Formwerkzeug (26, 126) umfasst, wenigstens einen Teil des oberen Formwerkzeugs (24, 124) und der Schneidkomponente (30, 130) zusammen in Längsrichtung zu bewegen, bis die Schneidkomponente (30, 130) wenigstens einen Teil des Rohlings (22, 122) schneidet;
wobei der Schritt des Schneidens durchgeführt wird, während sich der Rohling (22, 122) bei einer Temperatur von wenigstens 400 °C befindet und die Mikrostruktur des Rohlings (22, 122) im Wesentlichen Austenit ist; und
Abkühlen des Rohlings (22, 122) mit einer Rate von wenigstens 27 Grad pro Sekunde, während die obere Formoberfläche (42, 142) und die untere Oberfläche in Kontakt mit dem Rohling (22, 122) bleiben, bis die Mikrostruktur des Rohlings (22, 122) Martensit enthält,
wobei entweder die Schneidkomponente (30, 130) in Längsrichtung relativ zu der oberen Formoberfläche (42, 142) beweglich ist und der Schritt des Schneidens nach dem Schritt des Formens erfolgt und Bewegen der Schneidkomponente (30, 130) in Längsrichtung über die obere Formoberfläche (42, 142) hinaus umfasst oder
wobei die Schneidkomponente (30, 130) relativ zu der oberen Formoberfläche (42, 142) fest steht; die obere Formoberfläche (42, 142) und die Schneidkomponente (30, 130) eine obere Kante (150) zwischen sich bereitstellen; die untere Formoberfläche (46, 146) eine untere Kante bereitstellt, die mit der oberen Kante (150) ausgerichtet ist; und der Schritt des Schneidens gleichzeitig mit dem Schritt des Formens erfolgt und Bewegen der oberen Kante (150) zu der unteren Kante umfasst.

2. Verfahren gemäß Anspruch 1, wobei die Schneidkomponente (30, 130) bei dem Schritt des Schneidens durch nicht mehr als 95 % der Dicke des Rohlings (22, 122) schneidet.

3. Verfahren gemäß Anspruch 1, wobei die Schneidkomponente (30, 130) bei dem Schritt des Schneidens durch die gesamte Dicke des Rohlings (22, 122) schneidet.

4. Verfahren gemäß Anspruch 1, wobei ein erster Teil des oberen Formwerkzeugs (24) mit der Schneidkomponente (30) gekoppelt ist, ein zweiter Teil des oberen Formwerkzeugs (24) die obere Formoberfläche (42) darstellt, die Schneidkomponente (30) relativ zu dem zweiten Teil des oberen Formwerkzeugs (24) beweglich ist und der erste Teil des oberen Formwerkzeugs (24) von dem zweiten Teil weg vorgespannt ist.

5. Verfahren gemäß Anspruch 4, wobei ein Kissen benachbart zu der unteren Formoberfläche (46) des unteren Formwerkzeugs (26) unterhalb der Schneidkomponente (30) angeordnet ist und das Kissen in Richtung zu dem oberen Formwerkzeug (24) vorgespannt ist.

6. Verfahren gemäß Anspruch 1, wobei sich der Rohling (22, 122) während des Schritts des Schneidens bei einer Temperatur von wenigstens 685 °C befindet und die Mikrostruktur des Rohlings (22, 122) vollständig Austenit ist.

7. Verfahren gemäß Anspruch 1, wobei der Rohling (22, 122) eine Dicke aufweist, das obere (24, 124) und das untere Formwerkzeug (26, 126) einen Schneidspalt zwischen sich aufweisen und der Schneidspalt 2 % bis 15 % der Dicke des Rohlings (22, 122) ist.

8. Verfahren gemäß Anspruch 1, wobei das Stahlmaterial des Rohlings (22, 122) 0,18 % bis 0,28 % Kohlenstoff, 0,7 % bis 1,0 % Silicium, 1,0 % bis 2,0 % Mangan, 0,12 % bis 0,7 % Chrom, 0,1 % bis 0,45 % Molybdän, höchstens 0,025 % Phosphor, 0,008 % bis 0,01 % Schwefel, 0,02 % bis 0,05 % Titan, 0,01 % bis 0,06 % Aluminium und 0,002 % bis 0,004 % Bor, bezogen auf das Gesamtgewicht des Stahlmaterials, umfasst.

9. Verfahren gemäß Anspruch 1, wobei vor dem Schritt des Erhitzens eine aus Aluminium und Silicium gebildete Beschichtung auf den Stahlrohling (22, 122) aufgebracht wird.

10. Verfahren gemäß Anspruch 1, wobei der Schritt des Schneidens wenigstens eines von Zuschneiden, Durchstechen und Scheren des Rohlings (22, 122) umfasst.

11. Verfahren gemäß Anspruch 1, wobei Schritte des Erhitzens und Haltens des Rohlings (22, 122) auf die bzw. bei der Temperatur von 880 °C bis 950 °C, bis die Mikrostruktur des Stahlmaterials im Wesentlichen Austenit ist, in einem Ofen erfolgt, der von dem oberen (24, 124) und dem unteren Formwerkzeug (26, 126) getrennt ist, und ferner den Schritt des Entfernens des erhitzten Rohlings (22, 122) aus dem Ofen und Überführen des erhitzten Rohlings (22, 122) zu der unteren Formoberfläche (46, 146) umfasst, wobei die Zeitspanne zwischen dem Schritt des Entfernens des Rohlings (22, 122) aus dem Ofen und dem Schritt des Formens des Rohlings (22, 122) zwischen der oberen (42, 142) und der unteren Formoberfläche (46, 146) 5 bis 20 Sekunden beträgt.

## Revendications

1. Procédé de formage à chaud d'une pièce en acier, comprenant les étapes consistant à :
chauffer une ébauche (22, 122) formée de matériau d'acier jusqu'à une température de 880 °C à 950 °C ;
maintenir l'ébauche (22, 122) à la température de 880 °C à 950 °C jusqu'à ce que la microstructure du matériau d'acier soit sensiblement austénitique ;
disposer l'ébauche (22, 122) sur une surface de formage inférieure (46, 146) d'une matrice inférieure (26, 126) et distante d'une surface de formage supérieure (42, 142) d'une matrice supérieure (24, 124) tandis que l'ébauche (22, 122) est à une température d'au moins 400 °C et que la microstructure de l'ébauche (22, 122) est sensiblement austénitique, dans lequel la matrice supérieure (24, 124) est couplée à un composant de coupe (30, 130), et le composant de coupe (30, 130) est disposé de manière adjacente à la surface de formage supérieure (42, 142) ;
amener la matrice supérieure (24, 124) vers la matrice inférieure (26, 126) ;
l'étape consistant à amener la matrice supérieure (24 ,124) vers la matrice inférieure (26, 126) d'amener la surface de formage supérieure (42, 142) de la matrice supérieure (24, 124) jusqu'en contact avec l'ébauche (22, 122) pour former l'ébauche (22, 122) entre la surface de formage supérieure et la surface de formage inférieure (46, 146) ;
l'étape consistant à amener la matrice supérieure (24, 124) vers la matrice inférieure (26, 126) inclut de déplacer au moins une portion de la matrice supérieure (24, 124) et le composant de coupe (30, 130) conjointement longitudinalement jusqu'à ce que le composant de coupe (30, 130) coupe au moins une portion de l'ébauche (22, 122) ;
l'étape de coupe étant menée tandis que l'ébauche (22, 122) est à une température d'au moins 400 °C et que la microstructure de l'ébauche (22, 122) est sensiblement austénitique ; et
refroidir l'ébauche (22, 122) à une vitesse d'au moins 27 degrés par seconde tandis que la surface de formage supérieure (42, 142) et la surface inférieure restent en contact avec l'ébauche (22, 122) et jusqu'à ce que la microstructure de l'ébauche (22, 122) inclue de la martensite,
dans lequel
soit le composant de coupe (30, 130) est déplaçable longitudinalement relativement à la surface de formage supérieure (42, 142), et l'étape de coupe survient après l'étape de formage et inclut un déplacement du composant de coupe (30, 130) longitudinalement en passant devant la surface de formage supérieure (42, 142),
soit le composant de coupe (30, 130) est fixe relativement à la surface de formage supérieure (42,1 42) ; la surface de formage supérieure (42, 142) et le composant de coupe (30, 130) forment un rebord supérieur (150) entre eux ; la surface de formage inférieure (46, 146) présente un rebord inférieur aligné avec le rebord supérieur (150) ; et l'étape de coupe survient simultanément avec l'étape de formage et inclut un déplacement du rebord supérieur (150) vers le rebord inférieur.

2. Procédé selon la revendication 1, dans lequel le composant de coupe (30, 130) ne coupe pas plus de 95 % de l'épaisseur de l'ébauche (22, 122) pendant l'étape de coupe.

3. Procédé selon la revendication 1, dans lequel le composant de coupe (30, 130) coupe l'épaisseur entière de l'ébauche (22, 122) pendant l'étape de coupe.

4. Procédé selon la revendication 1, dans lequel une première portion de la matrice supérieure (24) est couplée au composant de coupe (30), une seconde portion de la matrice supérieure (24) présente la surface de formage supérieure (42), le composant de coupe (30) est déplaçable relativement à la seconde portion de la matrice supérieure (24), et la première portion de la matrice supérieure (24) est sollicitée en éloignement de la seconde portion.

5. Procédé selon la revendication 4, dans lequel un patin est disposé de manière adjacente à la surface de formage inférieure (46) de la matrice inférieure (26) en dessous du composant de coupe (30), et le patin est sollicité vers la matrice supérieure (24).

6. Procédé selon la revendication 1, dans lequel l'ébauche (22, 122) est à une température d'au moins 685 °C et la microstructure de l'ébauche (22, 122) est entièrement austénitique pendant l'étape de coupe.

7. Procédé selon la revendication 1, dans lequel l'ébauche (22, 122) a une épaisseur, la matrice supérieure (24, 124) et la matrice inférieure (26, 126) présentent un jeu de coupe entre elles, et le jeu de coupe est de 2 % à 15 % de l'épaisseur de l'ébauche (22, 122).

8. Procédé selon la revendication 1, dans lequel le matériau d'acier de l'ébauche (22, 122) comprend de 0,18 % à 0,28 % de carbone, de 0,7 % à 1,0 % de silicium, de 1,0 % à 2,0 % de manganèse, de 0,12 % à 0,7 % de chrome, de 0,1 % à 0,45 % de molybdène, 0,025 % maximum de phosphore, de 0,008 % à 0,01 % de soufre, de 0, 02 % à 0, 05 % de titane, de 0,01 % à 0, 06 % d'aluminium et de 0, 002 % à 0, 004 % de bore, sur la base du poids total du matériau d'acier.

9. Procédé selon la revendication 1, dans lequel un revêtement formé d'aluminium et de silicium est appliqué à l'ébauche d'acier (22, 122) avant l'étape de chauffe.

10. Procédé selon la revendication 1, dans lequel l'étape de coupe inclut au moins une opération consistant à tailler, percer et cisailler l'ébauche (22, 122).

11. Procédé selon la revendication 1, dans lequel l'étape de chauffe et de maintien de l'ébauche (22, 122) à la température de 880 °C à 950 °C jusqu'à ce que la microstructure du matériau d'acier soit sensiblement austénitique a lieu dans un four séparé de la matrice supérieure (24, 124) et de la matrice inférieure (26, 126), et inclut en outre l'opération consistant à enlever l'ébauche chauffée (22, 122) du four et à transférer l'ébauche chauffée (22, 122) jusqu'à la surface de formage inférieure (46, 146), dans lequel la durée entre l'opération consistant à enlever l'ébauche (22, 122) du four et l'étape de formage de l'ébauche (22, 122) entre la surface de formage supérieure (42, 142) et la surface de formage inférieure (46, 146) est de 5 à 20 secondes.
